# EUROPÄISCHE PATENTSCHRIFT

(11) **EP 2 549 909 B1**
(45) Veröffentlichungstag und Bekanntmachung des Hinweises auf die Patenterteilung: **27.02.2019**
(21) Anmeldenummer: 11710766.4
(22) Anmeldetag: 23.03.2011
(51) Int. Cl.: A47J 37/06, A47J 37/07

(54) **BRAT- UND/ODER GRILLVORRICHTUNG**
ROASTING AND/OR BROILING DEVICE
APPAREIL DE ROTISSERIE ET/OU GRILLAGE

(30) Priorität: 25.03.2010 DE 102010013437
(43) Veröffentlichungstag der Anmeldung: 30.01.2013
(73) Patentinhaber: Kanbur, Sendogan, 70569 Stuttgart (DE)
(72) Erfinder: KANBUR, Erdogan, 75391 Gechingen (DE); KANBUR, Sendogan, 75391 Gechingen (DE)
(74) Vertreter: Patentanwälte Ruff, Wilhelm, Beier, Dauster & Partner mbB
(86) Internationale Anmeldenummer: PCT/EP2011/054488
(87) Internationale Veröffentlichungsnummer: WO 2011/117315

(56) Entgegenhaltungen:
- EP-A1- 0 353 195
- DE-A1- 3 500 001
- FR-A1- 2 685 862
- US-A- 3 228 319
- US-A1- 2005 092 190
- US-A1- 2008 121 117

## Beschreibung

Die Erfindung betrifft eine Brat- und/oder Grillvorrichtung nach dem Oberbegriff des Patentanspruches 1.

Aus der US 3,228,319 A ist eine derartige Brat- und/oder Grillvorrichtung bekannt. Die bekannte Brat- und/oder Grillvorrichtung weist einen Garraum und eine im Garraum angeordnete Gargut-Aufnahmeeinheit sowie einen Brennraum auf zur Anordnung einer Heizvorrichtung. Die Gargut-Aufnahmeeinheit ist bewegbar in dem Garraum angeordnet. Durch ein teilweises Herausziehen der Gargut-Aufnahmeeinheit aus dem Garraum wird der Abstand zwischen dem fossilen Brennstoff der Heizvorrichtung und einem Gargut, welches sich in der Gargut-Aufnahmeeinheit befindet, geändert.

Aus dem Stand der Technik sind weitere Brat- und/oder Grillvorrichtungen zum Garen von Gargut bekannt. Die meisten Brat- und/oder Grillvorrichtungen weisen einen unterhalb eines Garraums angeordneten Brennraum auf, wobei der Brennraum zur Anordnung einer Heizquelle, wie beispielsweise Holzkohle, vorgesehen ist, und im Garraum üblicherweise ein Grillrost angeordnet ist. Nachteilig an diesen Brat- und/oder Grillvorrichtungen ist, dass durch heruntertropfendes und sich entzündendes Fett Karzinogene entstehen können. Eine weitere Grillvorrichtung ist von der DE 35 00 001 bekannt, welche eine Grillvorrichtung gemäss dem Oberbegriff von Anspruch 1 offenbart.

Aufgabe der Erfindung ist es, eine Brat- und/oder Grillvorrichtung der eingangs genannten Art zu schaffen, mit der energiesparend ein verbessertes Garen von Speisen erzielbar ist.

Diese Aufgabe wird durch die Merkmale des Patentanspruches 1 gelöst. Die hier verwendeten Merkmale "seitlich", "oben" und "unten", die eine absolute oder relative Positionierung im Raum beschreiben, sind auf eine Ausrichtung in montiertem Betriebszustand der Brat- und/oder Grillvorrichtung bezogen. Durch die erfindungsgemäße Lösung kann zum einen die Entstehung von Karzinogenen vermieden und zum anderen die Wärmestrahlung einer Heizquelle effizienter genutzt werden. Garen ist als Oberbegriff für Grillen, Braten oder eine andere Form der Zubereitung von Speisen durch Erhitzen zu verstehen. Für eine verbesserte und effiziente Energieausnutzung ist die erfindungsgemäße Kaminfunktion vorgesehen. Vorzugsweise ist der Garraum aufrecht und säulenförmig orientiert und mantelförmig vom Brennraum umgeben. Es ist vorteilhaft, wenn sich dabei der Brennraum über einen weiten Teil des Umfangs des Garraumes und besonders bevorzugt über dessen gesamte Höhe erstreckt. Der Brennraum kann sich auch lediglich über einen Teil des Umfangs und/oder der Höhe des Garraumes erstrecken. Mit der erfindungsgemäßen Brat- und/oder Grillvorrichtung können durch die Kombination des Kamineffektes mit einer direkten Wärmestrahlung kürzere Garzeiten, hohe Garqualität und eine effizientere Nutzung der Heizquelle erreicht werden. Nach außen ist der Brennraum geschlossen, um eine Abschirmung des Brennraumes und des Garraumes zur Umgebung zu erzielen.

Erfindungsgemäß weist die Brat- und/oder Grillvorrichtung eine im Brennraum angeordnete Heizvorrichtung auf. Dabei umfasst die Heizvorrichtung mindestens eine Heizquelle, wobei die Heizquelle ein fossiler Brennstoff, vorzugsweise ein fester Brennstoff wie Holz oder Kohle, und/oder ein Gasbrenner und/oder ein elektrischer Strahlungsheizkörper ist.

Erfindungsgemäß ist die Gargut-Aufnahmeeinheit und/oder die Heizvorrichtung beweglich, so dass zumindest bereichsweise ein Abstand zwischen mindestens einer im Brennraum angeordneten Heizquelle und einem im Garraum angeordneten Gargut verändert werden kann. Auf diese Weise kann die auf das Gargut wirkende Wärmestrahlung eingestellt werden. Dabei kann der Abstand vom Gargut zur Heizquelle nicht über den gesamten Umfang des Garraums bzw. dessen inneren Bereich gleichmäßig verändert werden, sondern nur relativ entsprechend einer vorgesehenen Kinematik der Brat- und/oder Grillvorrichtung. In einer vorteilhaften Ausgestaltung ist der Brennraum beweglich, insbesondere linear beweglich gelagert. Unter dem Brennraum ist ein Hohlraum oder ein Freiraum zu verstehen, der an wenigstens einer Seite durch eine Wandungsfläche begrenzt ist.

Erfindungsgemäß ist der Brennraum zumindest teilweise durch zwei türähnliche Flügelelemente ausgebildet, wobei die Flügelelemente um eine gemeinsame vertikale Achse schwenkbeweglich gelagert und zur Anordnung der Heizvorrichtung ausgebildet sind, und eine Lufteinlassmenge am Lufteinlass und/oder eine Luftauslassmenge am Luftauslass zumindest in Grenzen durch ein mechanisches Steuermittel in Form einer Abdeckung einstellbar, wobei die Abdeckung im Bereich des Luftauslasses angeordnet ist und um die vertikale Achse derart horizontal drehbar gelagert ist, dass durch Veränderung einer Überdeckung von Abdeckung und Luftauslass die Luftauslassmenge einstellbar ist.

In einer bevorzugten Ausgestaltung der Erfindung ist der Garraum in etwa zylinderförmig und der Brennraum umgibt diesen Zylinder mantelartig. Statt einer zylinderförmigen Ausgestaltung können Brennraum bzw. Garraum auch leicht konisch ausgebildet sein. Dabei führt eine Verjüngung nach oben hin zu einer vorteilhaften Verstärkung des Kamineffektes.

In einer Weiterbildung der Erfindung weist die Heizvorrichtung wenigstens einen Heizeinsatz zur Aufnahme mindestens einer Heizquelle auf. Hierdurch ist eine verbesserte Positionierung und Sicherung der Heizquelle erzielbar.

In einer Weiterbildung der Erfindung ist der Heizeinsatz austauschbar, und dies vorzugsweise werkzeugfrei. In einer vorteilhaften Ausgestaltung wird der Heizeinsatz auf eine Stellfläche des Brennraumes abgestellt ohne eine zusätzliche Fixierung. Alternativ ist ein in Führungsschienen einschiebbarer oder an Halteprofilierungen einer Begrenzungsfläche des Brennraumes gesicherter Heizeinsatz vorgesehen. Es ist besonders vorteilhaft, wenn die Heizquelle auch austauschbar ist, entweder separat oder gemeinsam mit dem Heizeinsatz. Hierzu ist vorzugsweise der Heizeinsatz werkzeuglos oder mittels eines Werkzeugs lösbar angeordnet. So kann eine defekte Heizquelle einfach ersetzt werden oder es kann von fossilem Brennstoff auf einen elektrischen Betrieb oder auf Gasbetrieb gewechselt werden.

In einer vorteilhaften Ausgestaltung ist die Abdeckung als Deckel ausgebildet und oberhalb vom Garraum und/oder Brennraum angeordnet, wobei die Abdeckung vorzugsweise beabstandet zur oberen Kante vom Garraum und/oder vom Brennraum angeordnet ist. Die Brat- und/oder Grillvorrichtung ist vorteilhaft aus Edelstahl. Denkbar ist aber auch, dass einzelne Teile zumindest teilweise aus einem anderem Material bestehen. Der Deckel kann vorteilhaft als Pfanne oder als ähnliche Auflagefläche für zu bratende Speisen ausgebildet sein und dann ein entsprechend geeignetes Material mit guten Wärmeleiteigenschaften zur Übertragung von Kontaktwärme enthalten. Er kann aber auch aus Glas sein ohne eine Bratfunktion. Die Abdeckung kann hub- oder schwenkbeweglich ausgebildet sein.

In einer weiteren Ausgestaltung der Erfindung ist die Gargut-Aufnahmeeinheit als entnehmbarer Einsatz gestaltet. Dabei kann die Gargut-Aufnahmeeinheit einteilig oder mehrteilig ausgebildet sein.

In einer bevorzugten Ausgestaltung weist die Gargut-Aufnahmeeinheit mindestens einen Grillrost, vorzugsweise mehrere etagenförmig übereinander angeordnete Grillroste auf. In einer vorteilhaften Ausgestaltung können die Grillroste separat aus der Gargut-Aufnahmeeinheit entnommen werden. Die Gargut-Aufnahmeeinheit kann auch wenigstens einen Spieß umfassen, auf den Grillgut aufgesteckt sein kann. Der Spieß oder die gesamte Gargut-Aufnahmeeinheit können drehbar gelagert sein. Es kann auch ein Antrieb zum Drehen des Spießes oder der gesamten Gargut-Aufnahmeeinheit vorgesehen sein, welcher sich vorzugsweise unterhalb des Garraums befindet.

In einer weiteren Ausgestaltung ist der Brennraum nach außen durch mindestens eine seitliche Wand begrenzt. Dabei ist die Wand zumindest teilweise wärmeisoliert durch wenigstens eine Wärmeisolationsschicht. In einer vorteilhaften Ausgestaltung ist die Wand doppelwandig und der Hohlraum zwischen den beiden Wänden kann mit einem Isoliermaterial, wie beispielsweise Steinwolle, gefüllt sein.

Diese und weitere Merkmale gehen außer aus den Ansprüchen auch aus der Beschreibung und den Zeichnungen hervor, wobei die einzelnen Merkmale jeweils für sich alleine oder zu mehreren in Form von Unterkombinationen bei einer Ausgestaltung der Erfindung und auf anderen Gebieten verwirklicht sein und vorteilhafte sowie für sich schutzfähige Ausführungen darstellen können, für die hier Schutz beansprucht wird.

Ausgestaltungen der Erfindung sind in den Zeichnungen schematisch dargestellt und werden im Folgenden näher erläutert. Die in den einzelnen Figuren gezeigten Ausführungen weisen teilweise Merkmale auf, die nicht in allen gezeigten Ausführungen dargestellt sind bzw. die nicht alle gezeigten Ausgestaltungen aufweisen. In den Zeichnungen zeigen
- Fig. 1: ein Ausführungsbeispiel einer erfindungsgemäßen Brat- und/oder Grillvorrichtung,
- Fig. 2: in Frontansicht einen Ausschnitt der Brat- und/oder Grillvorrichtung aus Fig. 1 im geöffneten Zustand,
- Fig. 3: in Draufsicht die Brat- und/oder Grillvorrichtung aus Fig. 1 im geschlossenen Zustand mit einer nahezu maximal eingestellten Luftauslassmenge,
- Fig. 4: in Rückansicht die Brat- und/oder Grillvorrichtung aus Fig. 1 im geöffneten Zustand,
- Fig. 5: in einer Ansicht von schräg oben einen erfindungsgemäßen Heizeinsatz,
- Fig. 6: in Draufsicht ein alternatives Ausführungsbeispiel eines Heizeinsatzes zur Aufnahme eines Gasbrenners als Heizquelle mit abgebender Wärmestrahlung,
- Fig. 7: in Frontansicht einen Gasbrenner als Heizquelle,
- Fig. 8: in Frontansicht ein alternatives Ausführungsbeispiel eines Heizeinsatzes mit einem elektrischen Strahlungsheizkörper als Heizquelle,
- Fig. 8a: in Draufsicht zwei elektrische Strahlungsheizkörper als Heizquelle zur Anordnung in einem zylinderförmigen Brennraum,
- Fig. 9: in Frontansicht eine Gargut-Aufnahmeeinheit mit mehreren etagenförmig übereinander angeordneten Grillrosten
- Fig. 9a: und in Frontansicht einen Spieß als Gargut-Aufnahmeeinheit.

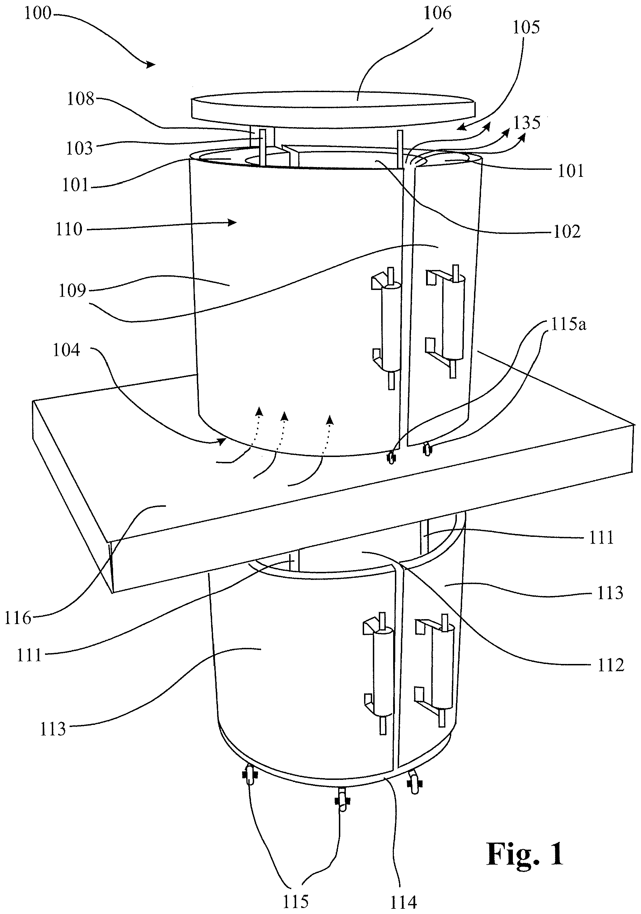

In Fig. 1 ist ein Ausführungsbeispiel einer erfindungsgemäßen Brat- und/oder Grillvorrichtung 100 dargestellt. Das gezeigte Ausführungsbeispiel weist einen zylinderförmigen Garraum 102 und einen diesen seitlich umgebenden Brennraum 101 auf. Dabei wird der Brennraum 101 durch zwei türähnliche Flügelelemente 109 gebildet, wobei jeweils eines der türähnlichen Flügelelemente 109 den Garraum 102 in etwa zur Hälfte in Umfangsrichtung umgibt. Beide Flügelelemente 109 sind um eine gemeinsame vertikale Achse 108 schwenkbeweglich gelagert. Bei diesem Ausführungsbeispiel sind der Brennraum 101 und der Garraum 102 oberhalb einer Tischplatte 116 angeordnet, welche wiederum von einem Gestell 111 getragen wird. So ist ein ergonomisches Be- und Entladen des Garraums 102 mit Gargut möglich.

Die Brat- und/oder Grillvorrichtung kann auch als Tischgrill ohne ein Untergestell und ohne eine in die Brat- und/oder Grillvorrichtung integrierte Tischplatte ausgebildet sein.

In dem gezeigten Ausführungsbeispiel weist die Brat- und/oder Grillvorrichtung 100 unterhalb der Tischplatte 116 zusätzlich einen Stauraum 112, insbesondere für eine Gasflasche oder für Grillzubehör auf. Der Stauraum 112 ist ebenfalls durch Bewegen türähnlicher Flügelelemente 113 zugänglich. Die gesamte Brat- und Grillvorrichtung 100 kann auf einer Bodenplatte 114 mit darunter angebrachten Rollen 115 angeordnet sein. Durch die Rollen 115 kann sie leicht von einem Ort zum anderen bewegt werden. Im Garraum 102 ist eine Gargut-Aufnahmeeinheit 103 angeordnet. Die Brat- und/oder Grillvorrichtung 100 weist oberhalb des Garraums 102 und des Brennraums 101 einen Luftauslass 105 zum Ausströmen einer Luftauslassmenge 135 auf. Für eine ausreichende Frischluftzufuhr ist ferner zwischen der Tischplatte 116 und den Flügelelementen 109 ein Lufteinlass 104 vorgesehen. Dazu sind die Flügelelemente 109 beabstandet oberhalb der Tischplatte 116 angeordnet. Es hat sich für das gezeigte Ausführungsbeispiel als vorteilhaft erwiesen, wenn die Flügelelemente zur Beibehaltung dieses Abstandes auf Rollen 115a oder ähnlichen roll- oder gleitbeweglichen Stützelementen geführt und abgestützt werden. Sie können aber auch nur an der Achse 108 drehbar gelagert sein und frei schwebend beweglich sein. Des Weiteren kann die Frischluft durch einen hier nicht erkennbar dargestellten Lufteinlass unterhalb der Tischplatte 116 in den Garraum 102 strömen. Zur Einstellung einer Luftauslassmenge 135 und zum Abdecken des Garraumes 102 ist ein mechanisches Steuermittel 106 in Form einer Abdeckung 106 vorgesehen. Die Abdeckung 106 befindet sich in dem dargestellten Ausführungsbeispiel oberhalb des Garraums 102 und des Brennraums 101 und ist an der aufrechten, säulenförmigen Achse 108, die am äußeren Rand der Abdeckung 106 angreift, horizontal drehbar gelagert. Durch eine Drehung der Abdeckung 106 um die Achse 108 kann eine Überdeckung von Abdeckung 106 und Brennraum 101 bzw. Garraum 102 verändert werden und eine Luftauslassmenge 135 eingestellt werden. Die Abdeckung kann bei einer anderen Ausführungsform auch um eine horizontale Achse nach Art einer Klappe schwenkbar gelagert sein.

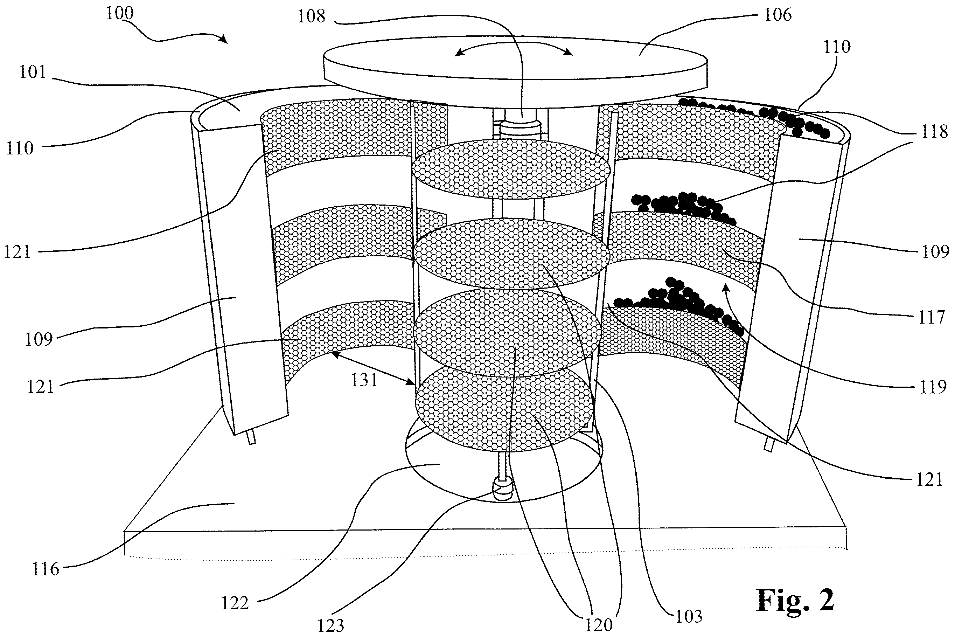

In Fig. 2 ist ein Ausschnitt der Brat- und/oder Grillvorrichtung 100 aus Fig. 1 im geöffneten Zustand in Frontansicht dargestellt. In dieser Abbildung ist die Gargut-Aufnahmeeinheit 103 gut zu erkennen. Zur Aufnahme des Garguts weist sie mehrere etagenförmig übereinander angeordnete Grillroste 120 auf. Die Gargut-Aufnahmeeinheit 103 ist in diesem Ausführungsbeispiel als entnehmbarer Einsatz ausgebildet und einfach in eine unterhalb der Tischplatte 116 angeordnete Bohrung eines hier nicht abgebildeten Gestells eingesteckt. Es ist vorteilhaft, wenn unterhalb des Garraums 102 eine herausnehmbare Auffangwanne 122 vorgesehen ist. Diese dient zum Sammeln von herabtropfendem Fett oder anderen Flüssigkeiten. In diesem Ausführungsbeispiel ist die Auffangwanne 122 unterhalb der Tischplatte 122 angeordnet, welche eine entsprechende Ausnehmung aufweist. Um ein Verschmutzen des Stauraums 112 durch heruntertropfendes Fett zu vermeiden, weist die Gargut-Aufnahmeeinheit 103 einen Tropfschutz 123 auf, der in etwa hütchenförmig ausgebildet ist und von oben die Bohrung überstülpt und Tropfen in die Auffangwanne 122 leitet.

In dieser Abbildung sind die türähnlichen Flügelelemente 109 gut zu erkennen. Der Garraum 102 ist zylinderförmig von dem zylindermantelartigen Brennraum 101 umgeben. Der Garraum kann aber auch rechteckig sein und von einem Brennraum aus zwei in der Draufsicht U-förmigen Hälften umgeben werden, wobei die Brennraum-Hälften dann vorteilhaft translatorisch nach außen beweglich sind.

In dem in Fig. 1 abgebildeten Ausführungsbeispiel ist im rechten türähnlichen Flügelelement 109 eine Heizvorrichtung 109 mit einem Heizeinsatz 117 vorgesehen, der zur Aufnahme von fossilem Brennstoff wie Holz oder Kohle als Heizquelle 118 ausgebildet ist. Der Brennraum 101 wird seitlich durch eine Außenwand 110 begrenzt. Dabei ist die Außenwand 110 bevorzugt doppelwandig ausgebildet und der Hohlraum zwischen den beiden Wänden mit einem Isoliermaterial, wie beispielsweise Steinwolle, gefüllt, was zum einen für eine effizientere Nutzung der Heizquelle 118 und zum anderen aus Sicherheitsgründen vorteilhaft ist. Die Wärmeisolation verhindert eine zu starke Aufheizung der Außenwände der Grillvorrichtung, insbesondere der Flügelelemente 109. Zum Be- und Entladen der Brat- und/oder Grillvorrichtung 100 können die türähnlichen Flügelelemente 109 um die Achse 108 bewegt bzw. gedreht werden. Auf diese Art und Weise ist es auch möglich, einen Abstand 131 vom Garraum 102 zum Brennraum 101 und damit zur Heizquelle 118 zu verändern.

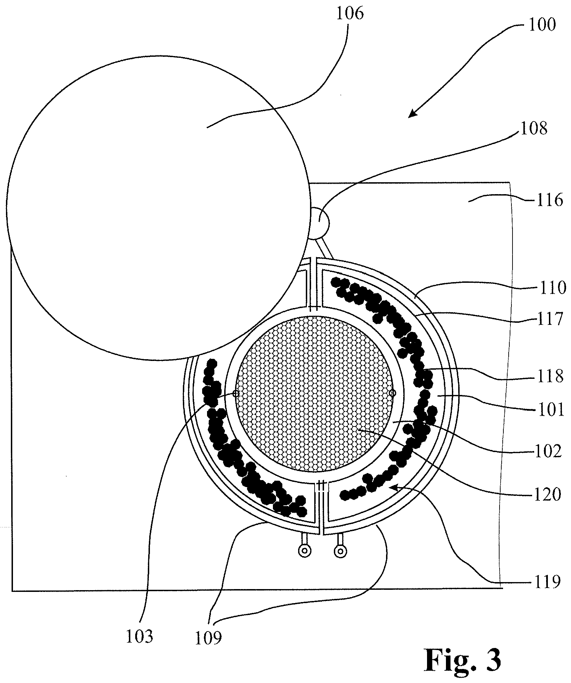

In Fig. 3 ist die Draufsicht auf die Brat- und/oder Grillvorrichtung 100 aus Fig. 1 mit einer nahezu maximal eingestellten Luftauslassmenge dargestellt. Gut zu erkennen ist die Achse 108 und die um diese Achse 108 verdrehte Abdeckung 106. Des Weiteren zeigt die Abbildung die seitlichen, doppelwandigen Außenwände 110 des Brennraumes 101 und den Garraum 102 mit der darin angeordneten Gargut-Aufnahmeeinheit 103 und den obersten Grillrost 120. Die im Brennraum 101 angeordnete Heizvorrichtung 119 weist als Heizquelle 118 einen fossilen Brennstoff in Form von Holzkohle auf, wobei diese in einem korbartigen Heizeinsatz 117 aufgenommen ist. Es ist in beiden türähnlichen Flügelelementen 109 jeweils ein Heizeinsatz 117 angeordnet. Die Heizeinsätze 117 sind in dem gezeigten Ausführungsbeispiel lediglich in den Brennraum 101 hineingestellt. Sie sind nicht verschraubt oder anderweitig befestigt, so dass sie werkzeugfrei ausgetauscht werden können. Die Flügelelemente 109 weisen zur Halterung der Heizeinsätze 117 nach innen zum Garraum ragende Seitenwangen auf, die Seitenbegrenzungen der Heizeinsätze 117 flankieren.

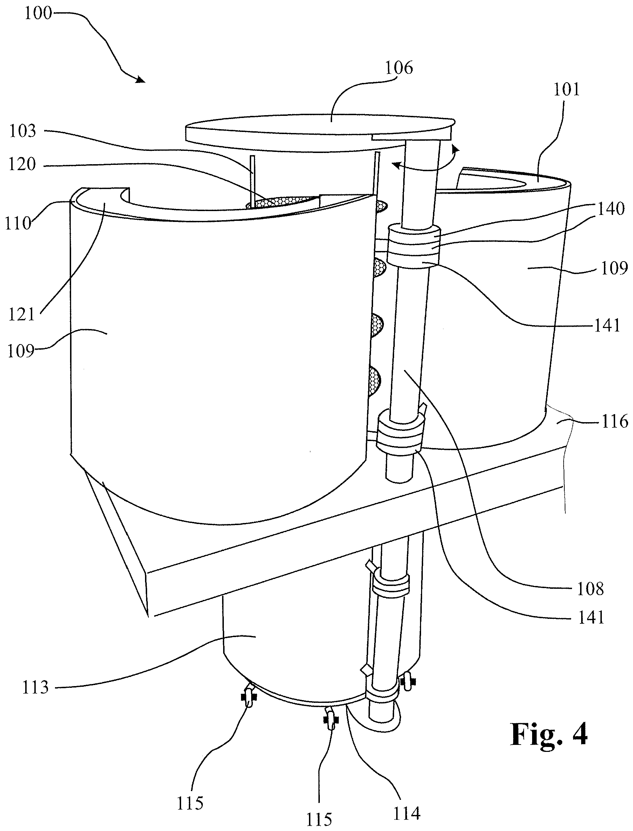

In Fig. 4 ist zum besseren Verständnis eine Rückansicht von der in Fig. 1 gezeigten Brat- und/oder Grillvorrichtung 100 im geöffneten Zustand dargestellt. Gut zu erkennen sind hier die Achse 108 und die Lagerungen 140 der Flügelelemente 109 bzw. der Türen 113 des Stauraums 112. Die Lagerungen 140 können wie beispielsweise als einfache Gleitlager ausgebildet sein und durch eine axiale Sicherung 141 in ihrer Position gehalten werden. Vorteilhaft sind die Sicherungen 141 entlang der Achse 108 höhenverstellbar, so dass durch Verändern der Position der Sicherung 141 der Abstand vom Flügelelement 109 zur Tischplatte 116 und damit der Lufteinlass 104 eingestellt werden kann.

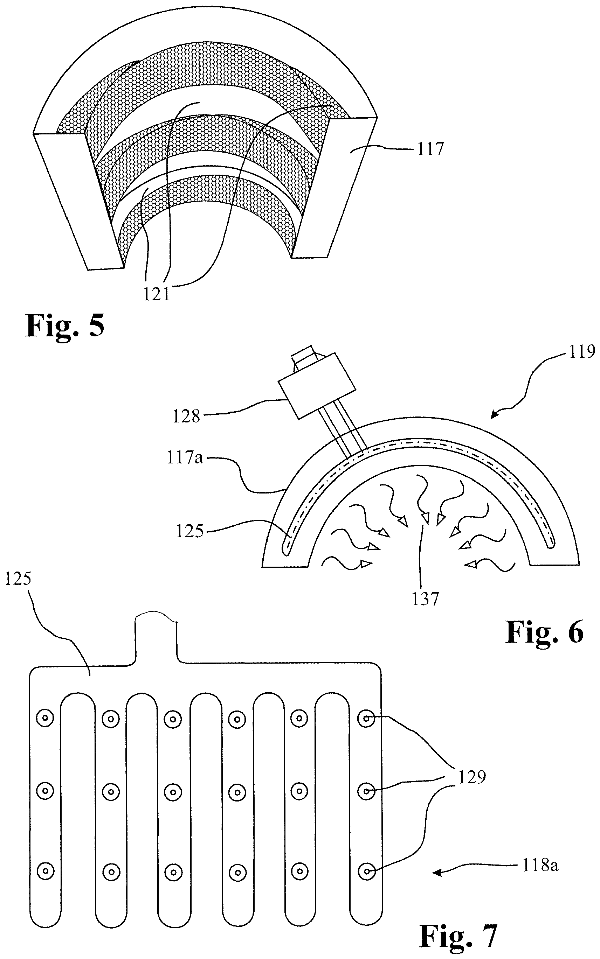

Fig. 5 zeigt zum besseren Verständnis einen Heizeinsatz 117, der zur Aufnahme von Kohle oder Holz ausgebildet ist. Der Heizeinsatz 117 weist mehrere übereinander angeordnete korbähnliche Fächer 121 auf, wobei die Fächer 121 vorzugsweise durch entsprechend angeordnete Lochbleche gebildet werden. Denkbar sind aber auch Gitterroste statt Lochbleche oder ein geschlossenes Blech, was jedoch die direkte Wärmestrahlung in den Garraum vermindert.

Fig. 6 zeigt in Draufsicht einen Heizeinsatz 117a mit einem Gasbrenner 125 als Heizquelle 118a, wobei die Intensität der Wärmestrahlung 117 über eine Steuerung 128 einstellbar ist.

In Fig. 7 ist als Ausführungsbeispiel für eine Heizquelle 118a ein Gasbrenner 125 mit Gasaustrittsdüsen 129 dargestellt.

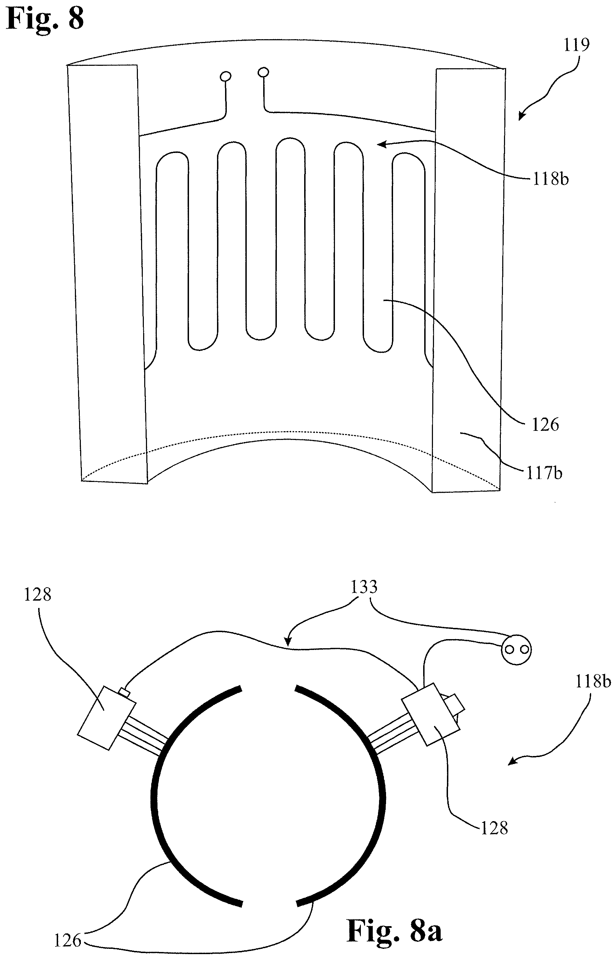

In Fig. 8 ist ein Heizeinsatz 117b mit einem darin angeordneten elektrischen Strahlungsheizkörper 126 als Heizquelle 118b in Frontansicht dargestellt. Selbstverständlich sind unterschiedliche Geometrien für den Strahlungsheizkörper möglich. Fig. 8a zeigt in Draufsicht als Heizquelle 118b zwei elektrische Strahlungsheizkörper für einen zylindermantelförmig ausgebildeten Brennraum. Die Steuerung 128 sowie die Stromversorgung 133 inklusive der erforderlichen Leitungen etc. werden vorzugsweise rückseitig und seitlich von außen an der Außenwand der Brat- und/oder Grillvorrichtung angeordnet.

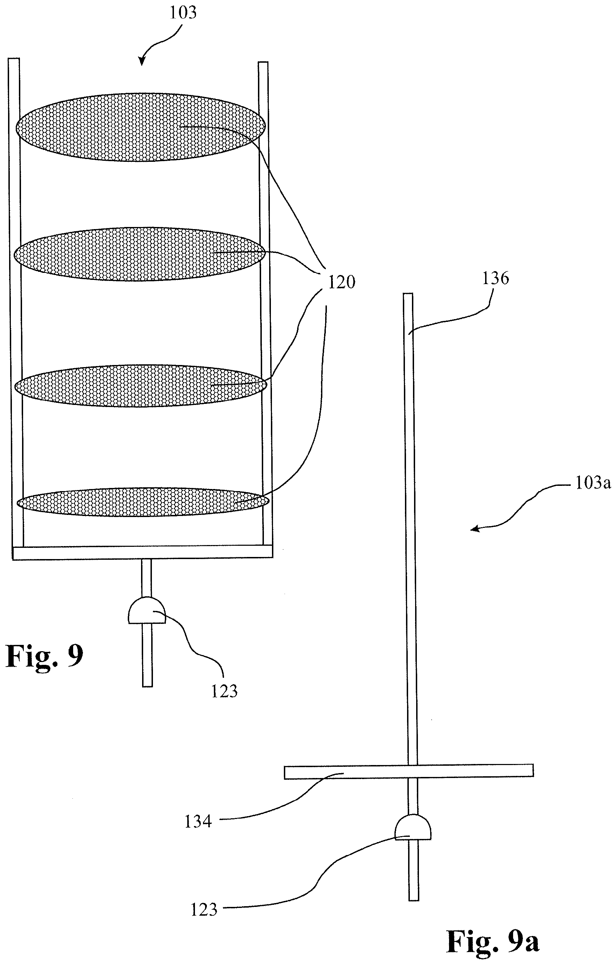

In Fig.9 ist die Gargut-Aufnahmeeinheit 103 mit mehreren etagenförmig übereinander angeordneten Grillrosten 120 separat im entnommenen Zustand dargestellt. Der Tropfschutz 123 ist hier gut zu erkennen. Fig. 9a zeigt eine alternative Gargut-Aufnahmeeinheit 103a in Form eines Spießes 136. Bevorzugt ist unten eine Axialsicherungsscheibe 134 vorgesehen. Diese Scheibe kann gemäß einer nicht dargestellten Ausführung auch als Auffangteller für Fett und Fleischsaft vorgesehen sein. In einer möglichen Ausgestaltung kann auch ein Antrieb zum Drehen der Gargut-Aufnahmeeinheit 103a oder auch der Gargut-Aufnahmeeinheit 103 mit den Grillrosten 120 in der Brat- und/oder Grillvorrichtung vorgesehen sein. Vorteilhaft ist der Drehantrieb unterhalb des Garraums, am besten unterhalb der Auffangwanne, angeordnet. Hierzu ist eine Kraftübertragungseinheit zwischen einem Antriebsmotor und dem Spieß 136 in Form eines Riemen- oder Zahnradtriebes vorgesehen.

## Patentansprüche

1. Brat- und/oder Grillvorrichtung (100) zum Garen von Gargut mit einem Garraum (102), einer im Garraum (102) angeordneten Gargut-Aufnahmeeinheit (103, 103a) und einem Brennraum (101) zur Anordnung einer Heizvorrichtung (119), wobei der Brennraum (101) den Garraum (102) zumindest abschnittsweise mantelförmig seitlich umgibt, wobei der Brennraum (101) zum Garraum (102) hin offen ist, und wobei dem Garraum (102) zur Erzeugung eines Kamineffektes ein Lufteinlass (104) in einem unteren Bereich und ein Luftauslass (105) in einem oberen Bereich zugeordnet sind, und wobei die Brat- und/oder Grillvorrichtung (100) mindestens eine im Brennraum (101) angeordnete Heizvorrichtung (119) aufweist, wobei die Heizvorrichtung (119) mindestens eine Heizquelle (118, 118a, 118b) aufweist und die Heizquelle (118, 118a, 118b) fossiler Brennstoff und/oder ein Gasbrenner (125) und/oder ein elektrischer Strahlungsheizkörper (126) ist, wobei die Gargut- Aufnahmeeinheit (103, 103a) und/oder die Heizvorrichtung (119) zumindest bereichsweise zur Veränderung eines Abstandes (131) zwischen mindestens einer im Brennraum (101) angeordneten Heizquelle (118, 118a, 118b) und einem im Garraum (102) angeordneten Gargut bewegbar sind, **dadurch gekennzeichnet, dass** der Brennraum (101) zumindest teilweise durch zwei türähnliche Flügelelemente (109) ausgebildet ist, wobei die Flügelelemente (109) um eine gemeinsame vertikale Achse (108) schwenkbeweglich gelagert und zur Anordnung der Heizvorrichtung (119) ausgebildetsind, und dass eine Lufteinlassmenge am Lufteinlass (104) und/oder eine Luftauslassmenge (135) am Luftauslass (105) zumindest in Grenzen durch ein mechanisches Steuermittel (106) in Form einer Abdeckung (106a) einstellbar ist, wobei die Abdeckung im Bereich des Luftauslasses (105) angeordnet ist und um die vertikale Achse (108) derart horizontal drehbar gelagert ist, dass durch eine Drehung der Abdeckung (106a) um die vertikale Achse (108) eine Überdeckung von Abdeckung (106a) und Luftauslass (105) verändert werden kann und dadurch die Luftauslassmenge (135) einstellbar ist.

2. Brat- und/oder Grillvorrichtung (100) nach Anspruch 1, **dadurch gekennzeichnet, dass** die Brat- und/oder Grillvorrichtung (100) einen in etwa zylinderförmigen Garraum (102) aufweist, und dass der Brennraum (101) den Garraum (102) zylindermantelartig umgibt.

3. Brat- und/oder Grillvorrichtung (100) nach Anspruch 1, **dadurch gekennzeichnet, dass** die Heizvorrichtung (119) mindestens einen Heizeinsatz (117, 117a, 117b) zur Aufnahme mindestens einer Heizquelle (118, 118a, 118b) aufweist.

4. Brat- und/oder Grillvorrichtung (100) nach Anspruch 3, **dadurch gekennzeichnet, dass** der Heizeinsatz (117, 117a, 117b) austauschbar ist, vorzugsweise werkzeugfrei austauschbar.

5. Brat- und/oder Grillvorrichtung (100) nach einem der vorhergehenden Ansprüche, **dadurch gekennzeichnet, dass** die Gargut-Aufnahmeeinheit (103, 103a) als entnehmbarer Einsatz ausgebildet ist.

6. Brat- und/oder Grillvorrichtung nach Anspruch 5, **dadurch gekennzeichnet, dass** die Gargut-Aufnahmeeinheit (103, 103a) mindestens einen Grillrost (120), vorzugsweise mehrere etagenförmig übereinander angeordnete Grillroste (120), und/oder einen Spieß (136) aufweist.

7. Brat- und/oder Grillvorrichtung (100) nach einem der vorhergehenden Ansprüche, **dadurch gekennzeichnet, dass** der Brennraum (101) nach außen durch mindestens eine seitliche Außenwand (110) begrenzt ist, wobei die Außenwand (110) zumindest teilweise wärmeisoliert ist.

## Claims

1. Roasting and/or grilling device (100) for cooking food which is to be cooked, comprising a cooking chamber (102), a food holding unit (103, 103a) arranged in the cooking chamber (102) and a combustion chamber (101) for the arrangement of a heating device (119), wherein the combustion chamber (101) at least partially laterally surrounds the cooking chamber (102) in the form of a jacket, wherein the combustion chamber (101) is open toward the cooking chamber (102), and wherein, in order to produce a chimney effect, an air inlet (104) is assigned to the cooking chamber (102) in a lower region and an air outlet (105) is assigned to the cooking chamber (102) in an upper region, and wherein the roasting and/or grilling device (100) has at least one heating device (119) arranged in the combustion chamber (101), wherein the heating device (119) has at least one heating source (118, 118a, 118b) and the heating source (118, 118a, 118b) is fossil fuel and/or a gas burner (125) and/or a radiant electric heating element (126), wherein the food holding unit (103, 103a) and/or the heating device (119) are movable at least in regions in order to change a distance (131) between at least one heating source (118, 118a, 118b) arranged in the combustion chamber (101) and food which is to be cooked and is arranged in the cooking chamber (102),
**characterized in that**
the combustion chamber (101) is at least partially designed as two door-like wing elements (109), wherein the wing elements (109) are mounted for pivoting about a common vertical axis (108) and are designed for the arrangement of the heating device (119), and **in that** an air inlet quantity at the air inlet (104) and/or an air outlet quantity (135) at the air outlet (105) is adjustable, at least within limits, by a mechanical control means (106) in the form of a covering (106a), wherein the covering is arranged in the region of the air outlet (105) and is mounted for horizontal rotation about the vertical axis (108) in such a manner that by rotating the covering (106a) about the vertical axis (108) an overlapping of covering (106a) and air outlet (105) can be varied and thereby the air outlet quantity (135) is adjustable.

2. Roasting and/or grilling device (100) according to claim 1, **characterized in that** the roasting and/or grilling device (100) has an approximately cylindrical cooking chamber (102), and **in that** the combustion chamber (101) surrounds the cooking chamber (102) in the manner of a cylinder jacket.

3. Roasting and/or grilling device (100) according to claim 1, **characterized in that** the heating device (119) has at least one heating insert (117, 117a, 117b) for holding at least one heating source (118, 118a, 118b).

4. Roasting and/or grilling device (100) according to claim 3, **characterized in that** the heating insert (117, 117a, 117b) is replaceable, preferably replaceable without a tool.

5. Roasting and/or grilling device (100) according to any of the preceding claims, **characterized in that** the food holding unit (103, 103a) is a removable insert.

6. Roasting and/or grilling device according to claim 5, **characterized in that** the food holding unit (103, 103a) has at least one grilling grate (120), preferably a plurality of grilling grates (120) arranged one above the other in the form of tiers, and/or a spit (136).

7. Roasting and/or grilling device (100) according to any of the preceding claims, **characterized in that** the combustion chamber (101) is bounded to the outside by at least one lateral outer wall (110), wherein the outer wall (110) is at least partially heatinsulated.

## Revendications

1. Appareil de rôtisserie et/ou grillage (100) pour cuire un produit à cuisiner comportant une chambre de cuisson (102), une unité conteneur de produit à cuisiner (103, 103a) disposée dans la chambre de cuisson (102) et une chambre de combustion (101) pour l'arrangement d'un dispositif de chauffage (119), dans lequel la chambre de combustion (101) entoure la chambre de cuisson (102) au moins par passages latéralement sous forme d'enveloppe, dans lequel la chambre de combustion (101) est ouverte vers la chambre de cuisson (102), et dans lequel, afin de générer un effet de cheminée, une entrée d'air (104) est associée à la chambre de cuisson (102) dans une région inférieure et une sortie d'air (105) est associée à la chambre de cuisson (102) dans une région supérieure, et dans lequel l'appareil de rôtisserie et/ou grillage (100) comprend au moins un dispositif de chauffage (119) disposé dans la chambre de combustion (101), dans lequel le dispositif de chauffage (119) comprend au moins une source de chaleur (118, 118a, 118b) et la source de chaleur (118, 118a, 118b) est un combustible fossile et/ou un brûleur à gaz (125) et/ou un radiateur rayonnant électrique (126), dans lequel l'unité conteneur de produit à cuisiner (103, 103a) et/ou le dispositif de chauffage (119) sont/est déplaçable(s) au moins dans certaines régions pour varier une distance (131) entre au moins une source de chaleur (118, 118a, 118b) disposée dans la chambre de combustion (101) et un produit à cuisiner disposé dans la chambre de cuisson (102),
**caractérisé en ce que**
la chambre de combustion (101) est formée au moins partiellement par deux éléments d'aile (109) de type portière, dans lequel les éléments d'aile (109) sont agencés de façon pivotante autour d'un axe vertical commun (108) et pour arranger le dispositif de chauffage (119), et **en ce qu'**une quantité d'air entrant sur l'entrée d'air (104) et/ou une quantité d'air sortant (135) sur la sortie d'air (105) sont/est ajustable(s) au moins de manière limitée par un moyen de contrôle mécanique (106) sous forme d'un couvercle (106a), dans lequel le couvercle est disposé au niveau de la sortie d'air (105) et est agencé de façon rotative horizontalement autour de l'axe vertical (108) de telle manière que par une rotation du couvercle (106a) autour de l'axe vertical (108) un recouvrement de couvercle (106a) et sortie d'air (105) peut être varié et ce faisant la quantité d'air sortant (135) est ajustable.

2. Appareil de rôtisserie et/ou grillage (100) selon la revendication 1, **caractérisé en ce que** l'appareil de rôtisserie et/ou grillage (100) comprend une chambre de cuisson (102) approximativement cylindrique, et **en ce que** la chambre de combustion (101) entoure la chambre de cuisson (102) sous forme d'enveloppe cylindrique.

3. Appareil de rôtisserie et/ou grillage (100) selon la revendication 1, **caractérisé en ce que** le dispositif de chauffage (119) comprend au moins un insert de chauffage (117, 117a, 117b) pour loger au moins une source de chaleur (118, 118a, 118b).

4. Appareil de rôtisserie et/ou grillage (100) selon la revendication 3, **caractérisé en ce que** l'insert de chauffage (117, 117a, 117b) est remplaçable, de préférence remplaçable sans outil.

5. Appareil de rôtisserie et/ou grillage (100) selon l'une quelconque des revendications précédentes, **caractérisé en ce que** l'unité conteneur de produit à cuisiner (103, 103a) est sous forme d'insert amovible.

6. Appareil de rôtisserie et/ou grillage selon la revendication 5, **caractérisé en ce que** l'unité conteneur de produit à cuisiner (103, 103a) comprend au moins une grille pour grillades (120), de préférence plusieurs grilles pour grillades (120) superposées l'une sur l'autre en étages et/ou une broche (136).

7. Appareil de rôtisserie et/ou grillage (100) selon l'une quelconque des revendications précédentes, **caractérisé en ce que** la chambre de combustion (101) est délimitée vers l'extérieur par au moins une paroi extérieure (110) latérale, dans lequel la paroi extérieure (110) est au moins partiellement isolée thermiquement.
